(19) Europäisches Patentamt
European Patent Office
Office européen des brevets

(11) **EP 1 146 281 B1**

(12) **EUROPÄISCHE PATENTSCHRIFT**

(45) Veröffentlichungstag und Bekanntmachung des Hinweises auf die Patenterteilung:
**23.04.2008 Patentblatt 2008/17**

(51) Int Cl.:
*F21S 8/10* *(2006.01)*        *F21V 8/00* *(2006.01)*
*F21W 101/12* *(2006.01)*        *F21W 101/14* *(2006.01)*

(21) Anmeldenummer: **01102107.8**

(22) Anmeldetag: **31.01.2001**

(54) **Signalleuchte mit mindestens einem Leuchtmittel und einem Lichtleiter**

Signal light having at least one light source and one light guide

Lampe de signalisation avec au moins une source lumineuse et un guide de lumière

(84) Benannte Vertragsstaaten:
**DE ES FR GB IT**

(30) Priorität: **13.04.2000 DE 10018284**

(43) Veröffentlichungstag der Anmeldung:
**17.10.2001 Patentblatt 2001/42**

(73) Patentinhaber: **VALEO Beleuchtung Deutschland GmbH**
**74321 Bietigheim-Bissingen (DE)**

(72) Erfinder:
• **Hering, Oliver**
**89522 Heidenheim (DE)**

• **Lendle, Reiner**
**78455 Hassmersheim (DE)**

(74) Vertreter: **Dreiss, Fuhlendorf, Steimle & Becker Patentanwälte,**
**Postfach 10 37 62**
**70032 Stuttgart (DE)**

(56) Entgegenhaltungen:
**WO-A-97/30373        US-A- 5 521 725**

• **PATENT ABSTRACTS OF JAPAN vol. 009, no. 101 (P-353), 2 May 1985 (1985-05-02) -& JP 59 226303 A (SUWA SEIKOSHA KK), 19 December 1984 (1984-12-19)**

**Beschreibung**

Die Erfindung betrifft eine Signalleuchte mit mindestens einem Leuchtmittel und einem Lichtleiter gemäß dem Oberbegriff des Anspruchs 1.

Derartige Signalleuchten werden beispielsweise in Kraftfahrzeugen verwendet. Beim Übergang von einem optisch dichteren Medium in ein optisch dünneres Medium wird Licht in Abhängigkeit des Einfallswinkels gebrochen. Es gibt einen Einfallswinkel, zu dem ein Brechungswinkel von 90° gehört. Wenn dieser sogenannte Grenzwinkel überschritten wird, ist ein Übergang in das optisch dünnere Medium nicht mehr möglich; vielmehr wird alles Licht an der Grenzfläche reflektiert. Dies wird als Totalreflexion bezeichnet.

Diese Tatsache wird sich bei Signalleuchten mit einem Leuchtmittel und einem Lichtleiter zunutze gemacht. Bekannte Lichtleiter weisen eine Stirnfläche als Lichteinkoppelfläche auf. Quer zur Längsachse ist eine Lichtaustrittsfläche angeordnet. An dieser werden die Lichtstrahlen quer zur Längsachse ausgekoppelt. Gegenüber der Lichtaustrittsfläche sind lichtablenkende Mittel vorgesehen. Um zu verhindern, dass das Licht auf dieser Seite auskoppelt, kann an dieser eine verspiegelung vorgesehen sein.

Es sind Signalleuchten bekannt, bei denen an der der Lichtaustrittsfläche gegenüberliegenden Seite lichtablenkende Mittel vorgesehen sind, an denen das Licht mittels Totalreflexion reflektiert wird und anschließend an der Lichtaustrittsfläche aus dem Lichtleiter auskoppelt. Auf diese Weise ergibt sich jedoch nur ein eingeschränkter Abstrahlbereich und es ist nicht möglich, eine gleichmäßige Ausleuchtung über einen längeren Lichtleiter zu erreichen.

Die DE 41 29 094 A1 beschreibt eine Signalleuchte für Kraftfahrzeuge. Diese weist eine Anzahl von Lichtquellen auf, die als Leuchtdioden ausgebildet sind. Jeder Leuchtdiode ist ein langgestreckter Lichtleiter zugeordnet. Mindestens eine Stirnfläche jedes Lichtleiters ist als eine Lichteinkoppelfläche ausgebildet. Die der Lichtaustrittsfläche abgewandte Seite weist lichtablenkende Mittel auf.

Aus der EP 0 933 587 A2 ist ein stabförmiger Lichtleiter für eine Beleuchtungseinrichtung für Fahrzeuge bekannt. Dieser weist mindestens eine Stirnfläche auf, die als Lichteinkoppelfläche dient. Die Lichtaustrittsfläche ist in Richtung der Längsachse des Lichtleiters angeordnet und strahlt quer zu dieser ab. Der Lichtaustrittsfläche gegenüberliegend ist eine reflektierende Fläche angeordnet, die quer zur Längsachse eine Vielzahl lichtablenkender Prismen hat. Die einander zugewandten Flanken benachbarter Prismen stoßen direkt aneinander und bilden einen Einschnittwinkel.

Der Abstand zwischen Lichtaustrittsfläche und reflektierender Fläche variiert, so dass sich dieser Abstand von der Lichteinkoppelfläche weg verringert. Auf diese Weise werden mindestens zwei verschiedene Einschnittwinkel gebildet. Der Aufbau des beschrieben Lichtleiters ist jedoch sehr aufwendig, sofern eine Verspiegelung erforderlich ist. Wird der Lichtleiter nicht verspiegelt, ergibt sich nur ein eingeschränkter Abstrahlbereich.

Aus der JP-A-59 226 393 ist ein Lichtleiter bekannt, bei dem die Lichtstrahlen über zwei Prismen umgelenkt und dann aus dem Lichtleiter ausgekoppelt werden. Hintere Bereiche des Lichtleiters werden von den Lichtstrahlen aber nicht erreicht. Der Lichtleiter strahlt über seine Länge mit unterschiedlicher Intensität ab. Aus der US-A-5 521 725 ist ein Lichtleiter bekannt, bei dem Licht über beide Stirnseiten eingestrahlt wird.

Ausgehend von der JP-A-59 226 393 liegt der Erfindung die Aufgabe zugrunde, eine Signalleuchte zu entwikkeln, die kostengünstig herzustellen ist und mit der eine gleichmäßige Abstrahlung über die gesamte Länge erreicht werden kann.

Die Aufgabe wird gelöst durch eine Signalleuchte mit den Merkmalen des Anspruchs 1.

Vorteilhafte Ausgestaltungen der Erfindung ergeben sich aus den Unteransprüchen.

Die Signalleuchte weist mindestens ein Leuchtmittel, beispielsweise eine LED, und einen Lichtleiter auf. Mindestens eine Stirnfläche des Lichtleiters dient als Lichteinkoppelfläche. Quer zu einer Längsachse des Lichtleiters ist eine Lichtaustrittsfläche vorgesehen, an der Lichtstrahlen auskoppeln. An der der Lichtaustrittsfläche gegenüberliegenden Fläche sind lichtablenkende Mittel angeordnet. Die erfindungsgemäße Signalleuchte zeichnet sich dadurch aus, dass bedingt durch die besondere Ausgestaltung der lichtablenkenden Mittel eine Korrektur der Richtung der Lichtstrahlen durchführbar ist, bevor diese an der Lichtaustrittsfläche auskoppeln.

Durch die besondere Ausgestaltung der lichtablenkenden Mittel kann eine Lichtverteilung erreicht werden, welche bisher nur durch eine Verspiegelung zu erzielen war. Dies wird dadurch erreicht, daß das Licht nicht sofort am ersten lichtablenkenden Mittel in Richtung der Lichtaustrittsfläche abgelenkt wird, sondern bewußt durch Brechung weitergeleitet wird. Die Richtungskorrektur des Lichtstrahls kann dazu dienen, den Lichtstrahl so im Lichtleiter zu steuern, daß dieser in einen breiten Winkelbereich geleitet werden kann.

Da keine Verspiegelung bzw. Bedampfung mehr notwendig ist, können die Kosten bei der Herstellung des Lichtleiters erheblich reduziert werden. Weiterhin entfällt der unerwünschte Einfluß der Bedampfungsqualität auf die Ausleuchtung und die Lichtwerte. Zudem wird eine gleichmäßigere Ausleuchtung erreicht, da die Lichtstrahlen weiter von dem Leuchtmittel entfernt aus dem Lichtleiter austreten.

Eine Möglichkeit ist es, daß das lichtablenkende Mittel, auf das ein Lichtstrahl zuerst trifft, aufgrund seiner Ausgestaltung eine Korrektur der Richtung des Lichtstrahls und ein Umleiten dessen auf ein zweites lichtablenkendes Mittel bewirkt, das wiederum bedingt durch seine Ausgestaltung eine Totalreflexion des Lichtstrahls verursacht. Der Lichtstrahl wird somit nicht sofort am ersten lichtablenkenden Mittel in Richtung Lichtaustrittsfläche gesteuert, sondern bewußt durch Brechung zu einem weiteren lichtablenkenden Mittel geleitet, an dem er einen günstigeren Auftreffwinkel bezüglich dessen Lot besitzt.

Eine weitere Möglichkeit besteht darin, daß die Korrektur der Richtung eines Lichtstrahls an mehr als einem lichtablenkenden Mittel durchführbar ist. Auf diese Weise werden mehrere lichtablenkende Mittel verwendet, um mehrere Richtungskorrekturen am Lichtstrahl vorzunehmen.

In einer bevorzugten Ausführungsform der Erfindung sind zwei Leuchtmittel vorgesehen. Beide Stirnflächen des Lichtleiters dienen dann als Lichteinkoppelflächen. Die Leuchtmittel sind vorzugsweise nahe der Lichteintrittsflächen angeordnet.

Ist nur ein Leuchtmittel vorgesehen, kann es zweckmäßig sein, wenn die der Lichteinkoppelfläche gegenüberliegende Fläche verspiegelt ist. Dies erhöht die Leuchtkraft der gesamten Anordnung.

Bevorzugt sind die lichtablenkenden Mittel Prismen. Auf diese Weise ergibt sich ein einfacher und kostengünstiger Herstellungsprozeß, da die Prismen gleichzeitig mit der Herstellung des Lichtleiters eingebracht werden können.

Durch die Variation der Prismenwinkel, der Prismenteilung und der Prismentiefe kann der Winkel der Ablenkung des Lichts einfach beeinflußt werden. Werden statt Prismen z.B. Linsen oder Freiformflächen verwendet, dann kann das System noch optimiert werden.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeipiel im Einzelnen beschrieben ist. Dabei können die in der Zeichnung dargestellten sowie in den Ansprüchen und in der Beschreibung erwähnten Merkmale jeweils einzeln für sich oder in beliebiger Kombination erfindungswesentlich sein.

In der Zeichnung zeigen:

Figur 1        die Ablenkung eines Lichtstrahls in einem herkömmlichen Lichtleiter mit verspiegelten Prismen;

Figur 2        die Ablenkung eines Lichtstrahls in einem herkömmlichen Lichtleiter mit nicht verspiegelten Prismen;

Figur 3        die Ablenkung eines Lichtstrahls in einem herkömmlichen Lichtleiter mit nicht verspiegelten Prismen mit Totalreflexion;

Figur 4        eine erfindungsgemäße Signalleuchte in schematischer Darstellung;

Figur 5        die erfindungsgemäße Signalleuchte mit einem schräg zur Abstrahlrichtung liegenden Lichtleiter; und

Figur 6 und 7  der Lichtleiter der erfindungsgemäßen Signalleuchte mit anderen Lichtstrahlen.

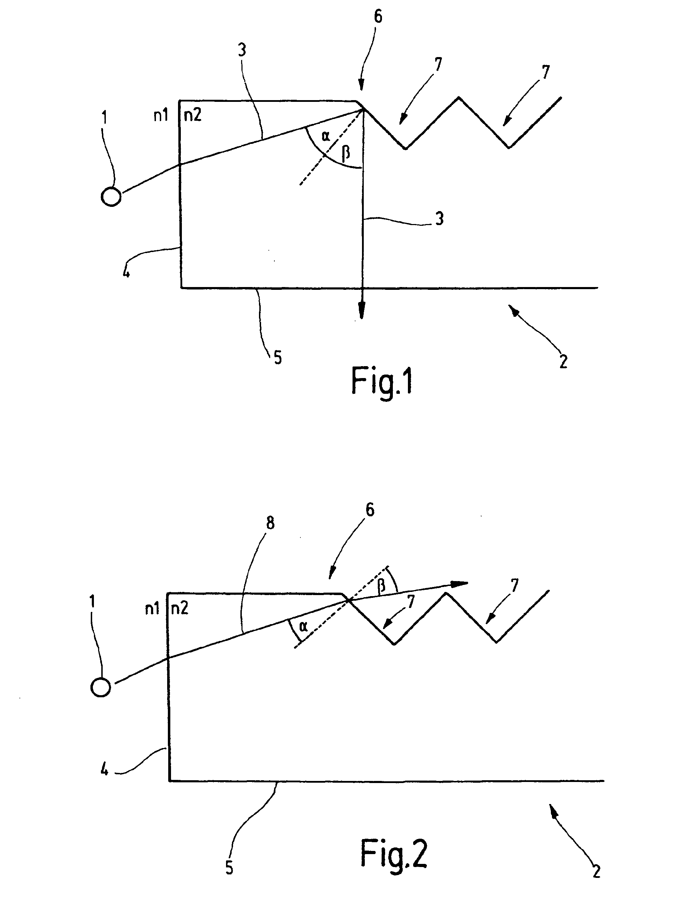

In Figur 1 ist ein Leuchtmittel 1 und ein Lichtleiter 2 dargestellt. Ein Pfeil 3 verdeutlicht den Verlauf eines Lichtstrahls. Dieser gelangt von einem Medium mit dem Brechungsindex n1 über eine Stirnfläche 4 des Lichtleiters 2, die als Lichteinkoppelfläche dient, in den Lichtleiter 2 mit dem Brechungsindex n2. Beim Übergang wird der Lichtstrahl abgelenkt. Der Lichtleiter 2 weist eine Lichtaustrittsfläche 5 und dieser gegenüberliegend eine Fläche 6 auf, an der Prismen 7 angeordnet sind. Die Prismen 7 sind verspiegelt, so daß der Lichtstrahl reflektiert wird und an der Lichtaustrittsfläche 5 aus dem Lichtleiter 2 auskoppelt. Dabei gilt:

$$\beta \;=\; \alpha$$

Figur 2 verdeutlicht, was passiert, wenn bei dem Lichtleiter 2 die Prismen nicht verspiegelt sind. Der Verlauf des Lichtstrahls wird mit Hilfe eines Pfeils 8 dargestellt. Zu erkennen ist, daß ohne eine Verspiegelung der Lichtstrahl den Lichtleiter 2 sofort an der Fläche 6 verlassen würde und nicht an der Lichtaustrittsfläche 5 auskoppeln würde. Hierbei gilt:

Für

$$\alpha < ArcSin\left(\frac{n_1}{n_2}\right);$$

ist

$$\beta = ArcSin\left(\frac{n_2}{n_1}Sin(\alpha)\right)$$

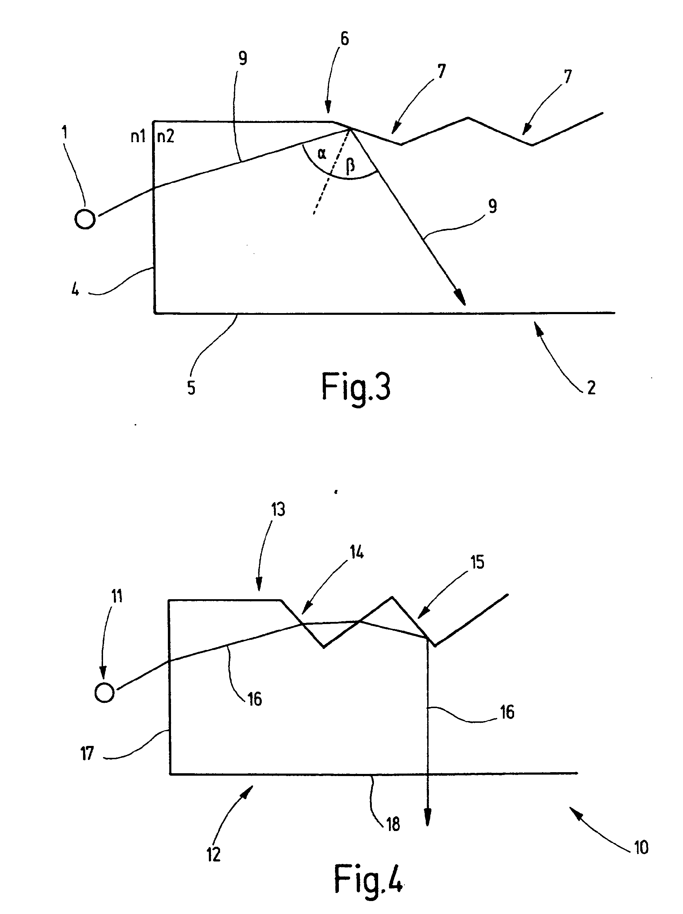

In Figur 3 ist dargestellt, wie durch einen flacheren Winkel der Prismen 7 bei dem herkömmlichen Lichtleiter 2 eine Totalreflexion des Lichtstrahls erreicht wird. Ein Pfeil 9 zeigt den Verlauf des Lichtstrahls. Da beim Einfall des Lichtstrahls der Grenzwinkel überschritten ist, wird dieser am Prisma 7 totalreflektiert. Allerdings führt dies dazu, daß der Lichtstrahl auf der gegenüberliegenden Seite, der Lichtaustrittsfläche 5, den Lichtleiter 2 gar nicht oder zumindest nicht im gewünschten Winkel verläßt. Es gilt:
für

$$\alpha > ArcSin\left(\frac{n_1}{n_2}\right);$$

ist

$$\beta = \alpha$$

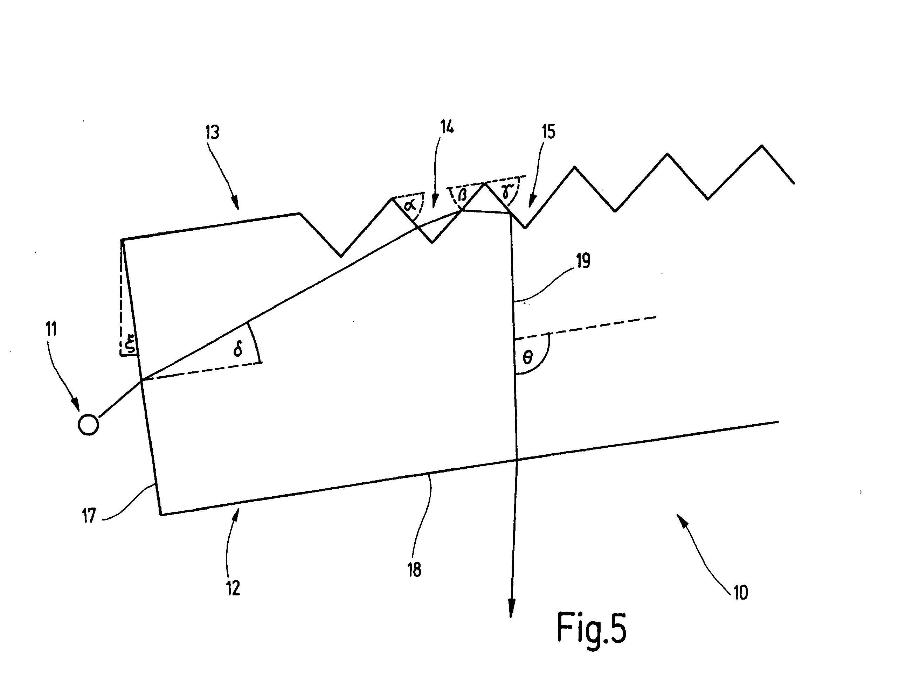

In Figur 4 ist eine erfindungsmäße Signalleuchte 10 dargestellt. Diese weist ein Leuchtmittel 11 und einen Lichtleiter 12 auf. An einer Fläche 13 des Lichtleiters 12 sind ein erstes Prisma 14 und ein zweites Prisma 15 angeordnet. Der Verlauf eines Lichtstrahls ist mit einem Pfeil 16 gezeigt. Der Lichtstrahl gelangt ausgehend von dem Leuchtmittel 11 durch eine Stirnfläche 17 des Lichtleiters 12 in diesen. Der Winkel des ersten Prismas 14 ist so gewählt, daß der Lichtstrahl für eine bestimmte Wegstrecke aus dem Lichtleiter 12 auskoppelt, um bei einer der nächsten Flächen wieder einzukoppeln. Dadurch wird die Richtung des Lichtstrahls innerhalb des Lichtleiters 12 korrigiert. Nun hat der Lichtstrahl bei dem zweiten Prisma 15 einen Einfallswinkel, der eine Totalreflexion in die gewünschte Austrittsrichtung erlaubt. Der Lichtstrahl koppelt an der Lichtaustrittsfläche 18 aus.
Wie in Figur 5 gezeigt, ist es sogar möglich, eine Streurichtung "rückwärts" in Richtung des Leuchtmittels 11 zu erreichen, was bei einem schräg zur Abstrahlrichtung liegenden Lichtleiter 12 notwendig sein kann. Ein Pfeil 19 zeigt in dieser Darstellung den Verlauf eines Lichtstrahls. Zu sehen ist, daß der Lichtstrahl mittels des ersten Prismas 14 korrigiert und mittels des zweiten Prismas 15 totalreflektiert wird und anschließend auskoppelt. Hierbei gilt:

$$\theta = -90 + 2\gamma + \beta + ArcSin\left[Sin\left(180 - \beta - \alpha - ArcSin\left[Sin(90-\alpha-\delta)\cdot\frac{n_2}{n_1}\right]\right)\cdot\frac{n_1}{n_2}\right]$$

Zu beachten ist, daß die Winkel der beiden Prismen 14, 15 so gewählt sind, daß beim ersten Prisma 14 keine Totalreflektion stattfindet. Totalreflektion erfolgt erst am zweiten Prisma 15. Dies wird mathematisch durch folgende Nebenbedingungen ausgedrückt:

I)

$$\alpha + \delta > 90 - ArcSin\left(\frac{n_1}{n_2}\right)$$

*II)*

$$180 - \gamma - \beta - ArcSin\left[Sin\left(180 - \beta - \alpha - ArcSin\left[Sin(90 - \alpha - \delta) \cdot \frac{n_2}{n_1}\right]\right) \cdot \frac{n_1}{n_2}\right] > ArcSin\left(\frac{n_1}{n_2}\right)$$

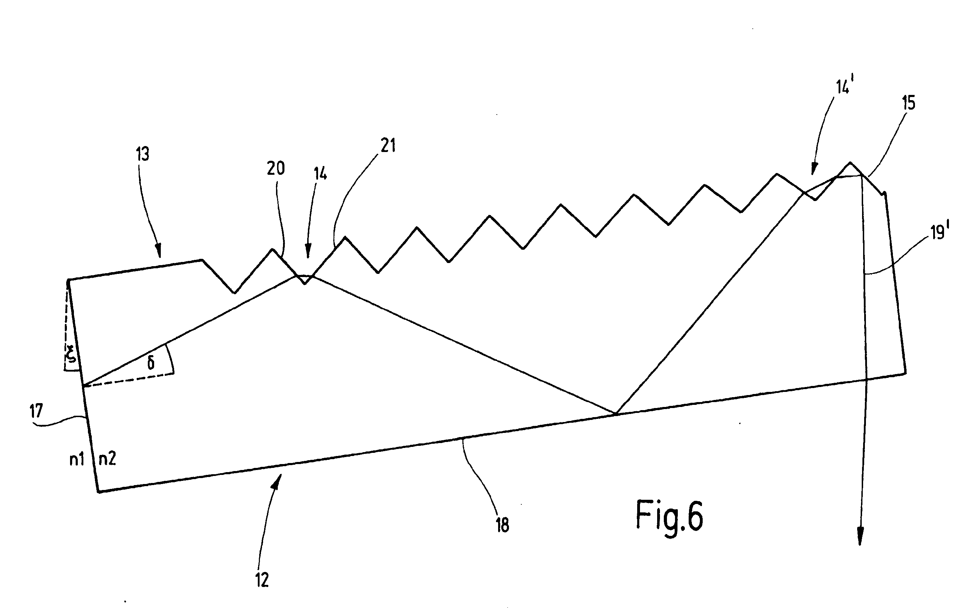

In der Figur 6 ist der Lichtleiter 12 mit einem anderen Lichtstrahl (Pfeil 19') dargestellt. Dieser Lichtstrahl wird im Prisma 14 an einer ersten Fläche 20 derart korrigiert, dass er nach dem Wiedereintritt in den Lichtleiter über eine zweite Fläche 21 des Prismas 14 nicht auf das nächste Prisma trifft sondern in Richtung der Lichtaustrittsfläche 18 gelenkt wird. Dort wird der Lichtstrahl reflektiert und gelangt zum Prisma 14' in einem hinteren Abschnitt des Lichtleiters 12. Der Lichtstrahl durchläuft dieses Prisma 14' wie zur Figur 5 Beschrieben und trifft dann auf die Lichtaustrittsfläche 18, durch die er hindurchtritt. Durch die geeignete Stellung der Flächen 20 und 21 des Prismas 14 wird der Lichtstrahl in hintere Bereiche des Lichtleiters 12 gelenkt.

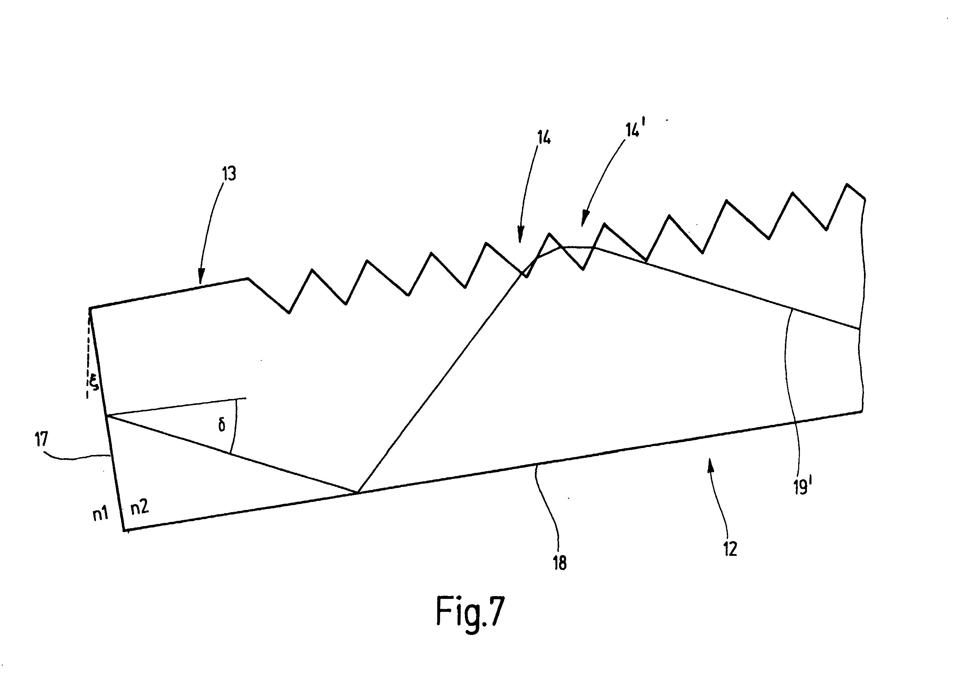

In der Figur 7 durchquert der Lichtstrahl nicht nur ein Prisma sondern zwei hintereinander liegende Prismen.

**Patentansprüche**

1. Signalleuchte (10) mit mindestens einem Leuchtmittel (11) und einem Lichtleiter (12), wobei mindestens eine Stirnfläche (17) des Lichtleiters (12) als Lichteinkoppelfläche dient, quer zu einer Längsachse des Lichtleiters (12) eine Lichtaustrittsfläche (18) vorgesehen ist, an der Lichtstrahlen (16, 19) auskoppeln, und an einer der Lichtaustrittsfläche (18) gegenüberliegenden Fläche (13) lichtablenkende Mittel angeordnet sind, wobei, bedingt durch die besondere Ausgestaltung der lichtablenkenden Mittel, eine Korrektur der Richtung der Lichtstrahlen durchführbar ist, bevor diese an der Lichtaustrittsfläche (18) auskoppeln, **dadurch gekennzeichnet, dass** das lichtablenkende Mittel, auf das ein Lichtstrahl (19') zuerst trifft, derart ausgestaltet ist, dass es der Gleichung

$$\theta = -90 + 2\gamma + \beta + ArcSin\left[Sin\left(180 - \beta - \alpha - ArcSin\left[Sin(90 - \alpha - \delta) \cdot \frac{n_2}{n_1}\right]\right) \cdot \frac{n_1}{n_2}\right]$$

genügt und eine Korrektur der Richtung des Lichtstrahls (19') und ein Umleiten des Lichtstrahls (19') auf ein zweites lichtablenkendes Mittel bewirkt, das wiederum der Gleichung

$$\alpha + \delta > 90 - ArcSin\left(\frac{n_1}{n_2}\right)$$

genügt und eine Totalreflexion des Lichtstrahls (19') verursacht, wobei die Korrektur der Richtung eines Lichtstrahls (19') an mehr als einem lichtablenkenden Mittel durchgeführt wird und wobei der Lichtstrahl (19') an der Lichtaustrittsfläche (18) total reflektiert wird und in Richtung von in einem hinteren Abschnitt des Lichtleiters (12) liegende Prismen (14', 15) abgelenkt wird, dabei ist:

$n_1$ = Brechungsindex eines Mediums außerhalb des Lichtleiter (12);
$n_2$ = Brechungsindex des Lichtleiter (12);
$\theta$ = Neigungswinkel des Lichtstrahls (19) bezüglich der Längsachse des Lichtleiter (12) vor dem vollständigen Austritt aus dem Lichtleiter (12);
$\alpha$ = Neigungswinkel der Prismenfläche für den Lichtaustritt am Prisma (14);
$\beta$ = Neigungswinkel der Prismenfläche für den Lichteintritt am Prisma (14);
$\gamma$ = Neigungswinkel der an das Prisma (14) angrenzenden Prismenfläche des Prismas (15); und
$\delta$ = Brechungswinkel im Lichtleiter (12).

**2.** Signalleuchte nach Anspruch 1, **dadurch gekennzeichnet, dass** wenigstens zwei Leuchtmittel (11) vorgesehen sind und beide Stirnflächen (17) des Lichtleiters (12) als Lichteinkoppelfläche dienen.

**3.** Signalleuchte nach Anspruch 1, **dadurch gekennzeichnet, dass** die der Lichteinkoppelfläche (17) gegenüberliegende Fläche verspiegelt ist.

**4.** Signalleuchte nach einem der vorhergehenden Ansprüche, **dadurch gekennzeichnet, dass** die lichtablenkenden Mittel Prismen (14, 15), Linsen oder Freiformflächen sind.

**5.** Signalleuchte nach Anspruch 4, **dadurch gekennzeichnet, dass** die Prismen (14, 15) eine erste Fläche (20) und eine zweite Fläche (21) aufweisen, wobei über die erste Fläche (20) ein Lichtstrahl ausgekoppelt und über die zweite Fläche (21) der Lichtstrahl wieder eingekoppelt wird.

**6.** Signalleuchte nach Anspruch 5, **dadurch gekennzeichnet, dass** der Lichtstrahl an der ersten Fläche (20) des nächsten Prismas (15) total reflektiert wird.

**Claims**

**1.** A signal lamp (10) having at least one illumination means (11) and an optical wave guide (12), wherein at least one front face (17) of the optical wave guide (12) is used as a light input face, a light exit face (18) is provided transversely in respect to a longitudinal axis of the optical wave guide (12), at which the light beams (16, 19) are decoupled, and light-deflecting means are arranged at a face (13) located opposite the light exit face (18), wherein, because of the special design of the light- deflecting means, a correction of the direction of the light beams can be performed prior to the latter being decoupled at the light exit face (18),
**characterized in that** the light-deflecting means on which a light beam (19') first impinges is designed in such a way that it satisfies the equation

$$\theta = -90 + 2\gamma + \beta + ArcSin\left[ Sin\left( 180 - \beta - \alpha - ArcSin\left[ Sin(90 - \alpha - \delta) \cdot \frac{n_2}{n_1} \right] \right) \cdot \frac{n_1}{n_2} \right]$$

and causes a correction of the direction of the light beam (19') and a deflection of the light beam (19') onto a second light- deflecting means, which in turn satisfies the equation

$$\alpha + \delta > 90 - ArcSin\left( \frac{n_1}{n_2} \right)$$

$$180 - \gamma - \beta - ArcSin\left[ Sin\left( 180 - \beta - \alpha - ArcSin\left[ Sin(90 - \alpha - \delta) \cdot \frac{n_2}{n_1} \right] \right) \cdot \frac{n_1}{n_2} \right] > ArcSin\left( \frac{n_1}{n_2} \right)$$

and causes a total reflection of the light beam (19'), wherein the correction of the direction of a light beam (19') is performed at more than one light-deflecting means, and wherein the light beam (19') is totally reflected at the light exit face (18) and is deflected in the direction toward prisms (14', 15) located in a rear section of the optical wave guide (12), wherein

$n_1$ = refraction index of a medium outside of the optical wave guide (12);

$n_2$ = refraction index of the optical wave guide (12);

$\theta$ = angle of inclination of the light beam (12) in respect to the longitudinal axis of the optical wave guide (12) prior to complete exit from the optical wave guide (12);

$\alpha$ = angle of inclination of the prism face for light exiting from the prism (14);

$\beta$ = angle of inclination of the prism face for light entering the prism (14);

$\gamma$ = angle of inclination of the prism face of the prism (15) adjoining the prism (14); and

$\delta$ = angle of refraction in the optical wave guide (12).

2. The signal lamp in accordance with claim 1, **characterized in that** at least two illumination means (11) are provided, and both front faces (17) of the optical wave guide (12) are used as light input faces.

3. The signal lamp in accordance with claim 1, **characterized in that** the face located opposite the light input face (17) is reflectorized.

4. The signal lamp in accordance with one of the preceding claims, **characterized in that** the light-deflecting means (14, 15) are lenses or free-form faces.

5. The signal lamp in accordance with claim 4, **characterized in that** the prisms (14, 15) have a first face (20) and a second face (21), wherein a light beam is decoupled via the first face (20) and the light beam is coupled in again via the second face (21).

6. The signal lamp in accordance with claim 5, **characterized in that** the light beam is totally reflected at the first face (20) of the next prism (15).

**Revendications**

1. Lampe témoin (10) comprenant au moins un moyen lumineux (11) et un guide de lumière (12), au moins une surface frontale (17) du guide de lumière (12) servant de surface d'injection de lumière, une surface de sortie de lumière (18) étant prévue transversalement à un axe longitudinal du guide de lumière (12), surface sur laquelle sortent des faisceaux de lumière (16, 19), et des moyens de déviation de lumière étant disposés sur une surface (13) opposée à la surface de sortie de lumière (18), sachant que, du fait de la conception particulière des moyens de déviation de lumière, une correction de la direction des faisceaux de lumière peut être mise en oeuvre avant que ces faisceaux sortent sur la surface de sortie de lumière (18), **caractérisée en ce que** le moyen de déviation de lumière, sur lequel un faisceau de lumière (19') arrive d'abord, est conçu de telle sorte qu'il répond à l'équation suivante :

$$\theta = -90 + 2\gamma + \beta + ArcSin\left[ Sin\left( 180 - \beta - \alpha - ArcSin\left[ Sin(90 - \alpha - \delta) \cdot \frac{n_2}{n_1} \right] \right) \cdot \frac{n_1}{n_2} \right]$$

et entraîne une correction de la direction du faisceau de lumière (19') et une déviation du faisceau de lumière (19') sur un second moyen de déviation de lumière, lequel à son tour répond à l'équation suivante :

$$\alpha + \delta > 90 - ArcSin\left( \frac{n_1}{n_2} \right)$$

$$180 - \gamma - \beta - ArcSin\left[Sin\left(180 - \beta - \alpha - ArcSin\left[Sin(90 - \alpha - \delta) \cdot \frac{n_2}{n_1}\right]\right) \cdot \frac{n_1}{n_2}\right] > ArcSin\left(\frac{n_1}{n_2}\right)$$

et provoque une réflexion totale du faisceau de lumière (19'), la correction de la direction d'un faisceau de lumière (19') étant réalisée sur plus d'un moyen de déviation de lumière et le faisceau de lumière (19') étant réfléchi complètement sur la surface de sortie de lumière (18) et étant dévié en direction de prismes (14', 15) situés dans une partie arrière du guide de lumière (12) :
signification des abréviations

$n_1$ = indice de réfraction d'un milieu à l'extérieur du guide de lumière (12) ;
$n_2$ = indice de réfraction du guide de lumière (12) ;
θ = angle d'inclinaison du faisceau de lumière (19) par rapport à l'axe longitudinal du guide de lumière (12) avant la sortie complète du guide de lumière (12) ;
α = angle d'inclinaison de la surface de prisme pour la sortie de lumière sur le prisme (14) ;
β = angle d'inclinaison de la surface de prisme pour l'entrée de lumière sur le prisme (14) ;
γ = angle d'inclinaison de la surface de prisme, contiguë au prisme (14), du prisme (15) ; et
δ = angle de réfraction dans le guide de lumière (12).

2. Lampe témoin selon la revendication 1, **caractérisée en ce qu'**au moins deux moyens d'éclairage (11) sont prévus et deux surfaces frontales (17) du guide de lumière (12) servent de surface d'injection de lumière.

3. Lampe témoin selon la revendication 1, **caractérisée en ce que** la surface faisant face à la surface d'injection de lumière (17) est revêtue d'une couche réfléchissante.

4. Lampe témoin selon l'une quelconque des revendications précédentes, **caractérisée en ce que** les moyens de déviation de lumière sont des prismes (14, 15), des lentilles ou des surfaces à forme libre.

5. Lampe témoin selon la revendication 4, **caractérisée en ce que** les prismes (14, 15) présentent une première surface (20) et une seconde surface (21), un faisceau de lumière sortant par la première surface (20) et le faisceau de lumière étant injecté à nouveau par la seconde surface (21).

6. Lampe témoin selon la revendication 5, **caractérisée en ce que** le faisceau de lumière est réfléchi entièrement sur la première surface (20) du prochain prisme (15).

Fig.1

Fig.2

Fig.3

Fig.4

Fig.5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4129094 A1
- EP 0933587 A2
- JP 59226393 A
- US 5521725 A